# FASCICULE DE BREVET EUROPEEN

(11) **EP 2 929 073 B1**
(45) Date de publication et mention de la délivrance du brevet: **06.02.2019**
(21) Numéro de dépôt: 13808152.6
(22) Date de dépôt: 03.12.2013
(51) Int. Cl.: D03D 25/00, B29C 70/24, F01D 5/28

(54) **PROCEDE DE FABRICATION D'UN PIED D'AUBE DE TURBOMACHINE EN MATERIAU COMPOSITE ET PIED D'AUBE OBTENU PAR UN TEL PROCEDE**
VERFAHREN ZUR HERSTELLUNG EINES TURBINENMOTORSCHAUFELFUSSES AUS EINEM VERBUNDSTOFF UND DURCH SOLCH EIN VERFAHREN HERGESTELLTER SCHAUFELFUSS
METHOD FOR MANUFACTURING A TURBINE ENGINE BLADE ROOT OF A COMPOSITE MATERIAL AND BLADE ROOT OBTAINED BY SUCH A METHOD

(30) Priorité: 05.12.2012 FR 1261640
(43) Date de publication de la demande: 14.10.2015
(73) Titulaire: Safran Aircraft Engines, 75015 Paris (FR)
(72) Inventeur: ILLAND, Hubert, F-77550 Moissy-Cramayel Cedex (FR)
(74) Mandataire: Boura, Olivier
(86) Numéro de dépôt international: PCT/FR2013/052925
(87) Numéro de publication internationale: WO 2014/087093

(56) Documents cités:
- FR-A1- 2 939 129
- US-A1- 2005 084 377

## Description

### Arrière-plan de l'invention

La présente invention se rapporte au domaine général de la réalisation d'une aube en matériau composite pour roue mobile de turbomachine. Elle concerne plus précisément la fabrication du pied d'une telle aube.

Le domaine visé est celui des aubes mobiles de turbines à gaz pour moteurs aéronautiques ou turbines industrielles.

La réalisation d'aubes en matériau composite, notamment en CMC (composite à matrice céramique) pour des turbomachines a déjà été proposée. On se référera notamment au document FR 2,939,129 qui décrit la fabrication d'une aube de turbomachine en matériau composite comprenant un renfort fibreux densifié par une matrice. Avec un tel procédé, l'aube obtenue présente notamment un pied formé à partir d'une bande fibreuse s'étendant selon une direction correspondant à la direction longitudinale de l'aube.

Par ailleurs, pour le montage d'une telle aube sur un disque de rotor, il est connu de conférer au pied d'aube une forme de bulbe. Le pied d'aube avec sa forme de bulbe coopère avec une rainure de forme correspondante pratiquée à la périphérie du disque de rotor pour assurer la retenue radiale de l'aube sur le disque par une liaison de type à queue d'aronde.

Dans le cas d'une aube en matériau composite, la forme de bulbe du pied d'aube est généralement réalisée au cours du tissage de l'ébauche fibreuse qui constituera l'aube en formant une surépaisseur au niveau du pied d'aube, cette surépaisseur étant ensuite usinée aux formes définitives du bulbe. En pratique, la surépaisseur est le plus souvent obtenue par ajout d'un insert lors du tissage de l'ébauche fibreuse.

Cependant, un tel procédé de fabrication d'une aube en matériau composite avec un pied en forme de bulbe présente de nombreux inconvénients. En effet, la réalisation de l'insert et son positionnement au cours du tissage de l'ébauche fibreuse de l'aube sont des opérations très délicates. En outre, l'attache de l'aube présente des difficultés à résister mécaniquement et se dégrade en fatigue par oxydation.

On connaît également du document FR 2,941,487 une solution de montage d'une aube en matériau composite sur un disque de rotor dans laquelle le pied d'aube est enserré entre des plaques métalliques qui sont fixées par l'intermédiaire d'un pion soudé. Avec cette solution, l'effort principal de retenue de l'aube sur le disque de rotor est repris par le cisaillement du pion et le matage du trou dans le matériau composite. Toutefois, la différence de dilatation entre le métal des plaques et le matériau composite du pied génère soit des contraintes de cisaillement thermique si la fixation est rigide, soit une incertitude sur le positionnement des portées si la fixation est réalisée avec un jeu.

### Objet et résumé de l'invention

La présente invention a donc pour but principal de pallier de tels inconvénients en proposant un pied d'aube en matériau composite dont l'attache sur un disque de rotor par une liaison de type à queue d'aronde ne présente pas les inconvénients précités.

Ce but est atteint grâce à un procédé de fabrication d'un pied d'aube de turbomachine en matériau composite comprenant un renfort fibreux densifié par une matrice, le procédé comportant la réalisation d'une bande fibreuse centrale et de deux bandes fibreuses externes à partir de trois ensembles de couches de fils liées entre elles par tissage tridimensionnel, les bandes fibreuses s'étendant selon une même direction correspondant à la direction longitudinale du pied d'aube à fabriquer et les fils des ensembles de couches de fils n'étant pas liés entre les différentes bandes fibreuses, la traversée de la bande centrale par les deux bandes externes avec croisement des deux bandes externes à l'intérieur de la bande centrale, l'élimination par découpe de parties des deux bandes externes qui sont extérieures à la bande centrale pour former une ébauche fibreuse de pied d'aube, la mise en forme de l'ébauche fibreuse pour obtenir une préforme fibreuse ayant une partie principale formant préforme de pied d'aube en une seule pièce avec deux parties secondaires formant préformes de portées, et la densification de la préforme fibreuse par une matrice pour obtenir un pied d'aube en matériau composite ayant un renfort fibreux constitué par la préforme et densifié par la matrice.

Un tel procédé de fabrication permet d'obtenir un pied d'aube ayant des portées qui peuvent supporter des charges importantes avec des déformations moindres. En effet, les efforts du disque de rotor sur ces portées s'effectuent selon le sens des fils des parties des bandes fibreuses constituant ces portées. En particulier, ces efforts ne se traduisent pas en des écrasements des couches de fils. La durée de vie du pied d'aube s'en trouve augmentée à iso encombrement.

De plus, ce procédé de fabrication supprime le recours à un insert lors du tissage de l'ébauche fibreuse pour donner sa forme de bulbe au pied. Il en résulte une simplification du procédé, une plus grande robustesse, la possibilité de réaliser une densification de la préforme sans dépassement significatif de l'épaisseur de la bande centrale et des gains de cycles de fabrication et de coûts.

Avantageusement, les deux bandes externes traversent la bande centrale selon des directions formant un angle compris entre 15° et 75° - et de préférence égal à 45° - par rapport à la direction de la bande centrale.

La bande centrale peut également être utilisée pour la réalisation d'une préforme fibreuse de pale d'aube. De même, au moins l'une des bandes externes peut également être utilisée pour la réalisation d'une préforme fibreuse de plateforme et/ou de talon d'aube.

Les bandes fibreuses peuvent être tissées avec leur direction longitudinale correspondant à celle du pied d'aube à fabriquer s'étendant en sens chaîne. Alternativement, les bandes fibreuses peuvent être tissées avec leur direction longitudinale correspondant à celle du pied d'aube à fabriquer s'étendant en sens trame.

Corrélativement, l'invention a pour objet un pied d'aube de turbomachine en matériau composite comprenant un renfort fibreux densifié par une matrice, caractérisé en ce que le pied d'aube comporte une partie constitutive de pied d'aube formant une seule pièce avec deux parties constitutives de portées, les deux parties constitutives de portées traversant la partie constitutive de pied d'aube avec croisement des parties constitutives de portées à l'intérieur de la partie constitutive de pied d'aube.

Le pied d'aube peut être en matériau composite à matrice céramique.

L'invention a aussi pour objet une aube de turbomachine équipée d'un pied d'aube tel que défini ci-dessus ou fabriqué selon le procédé tel que défini précédemment. L'invention a encore pour objet une turbomachine équipée d'au moins une telle aube.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue d'un pied d'aube selon l'invention monté sur un disque de rotor ;
- la figure 2 montre de façon très schématique la disposition de trois bandes fibreuses pour la réalisation d'une ébauche fibreuse en vue de fabriquer le pied d'aube de la figure 1 ; et
- la figure 3 est une vue schématique de l'ébauche fibreuse obtenue par la disposition de la figure 2.

### Description détaillée de l'invention

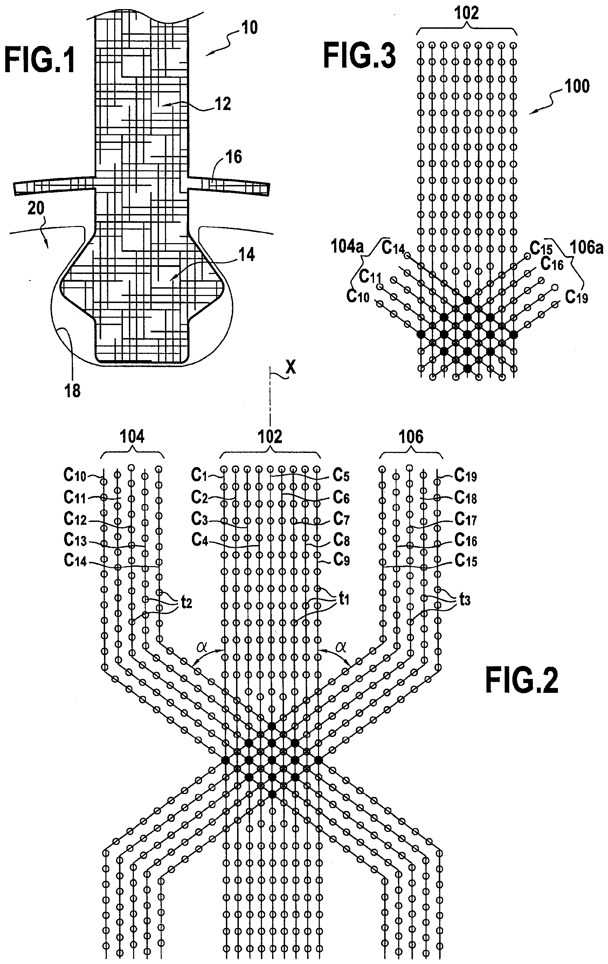

L'invention est applicable à différentes aubes en matériau composite pour turbomachine, notamment aux aubes de compresseur et de turbine de différents corps d'un moteur à turbine à gaz, par exemple aux aubes de turbine basse-pression telles que celle partiellement illustrée sur la figure 1.

De façon connue en soi, l'aube 10 illustrée sur cette figure comprend une pale 12, un pied 14 et une plateforme 16 située entre le pied 14 et la pale 12. L'aube pourrait également comporter un talon (non représenté) au voisinage de l'extrémité libre (ou sommet) de la pale.

La pale 12 de l'aube présente un profil aérodynamique incurvé qui s'étend (en direction longitudinale) depuis la plateforme 16 jusqu'à son sommet. Ce profil est d'épaisseur variable et est formé d'une surface intrados et d'une surface extrados qui sont reliées transversalement par un bord d'attaque et un bord de fuite (non représentés).

Le pied 14 de l'aube est ici en forme de bulbe et est destiné à être monté dans une rainure 18 formée à la périphérie d'un disque de rotor 20 par une liaison de type à queue d'aronde.

L'aube 10 et son pied 14 sont en matériau composite, et de préférence en matériau composite à matrice céramique (CMC). On pourra par exemple se référer à la demande de brevet internationale WO 2010/061140 qui décrit un exemple de fabrication d'une aube de turbomachine par réalisation d'une préforme fibreuse par tissage tridimensionnel et densification de la préforme par une matrice.

Plus particulièrement, ce procédé prévoit la réalisation par tissage tridimensionnel d'une ébauche fibreuse en une seule pièce, la mise en forme de l'ébauche fibreuse pour obtenir une préforme fibreuse en une seule pièce ayant une première partie formant préforme de pale et pied d'aube et au moins une deuxième partie formant préforme de plateforme ou talon d'aube, et la densification de la préforme par une matrice. Ce procédé permet ainsi d'obtenir une aube en matériau composite ayant un renfort fibreux constitué par la préforme et densifié par la matrice, et formant une seule pièce avec plateforme et/ou talon intégrés.

Les figures 2 et 3 montrent très schématiquement la réalisation d'une ébauche fibreuse à partir de laquelle une préforme fibreuse 100 de pied d'aube peut être mise en forme afin, après densification par une matrice et usinage éventuel, d'obtenir un pied pour aube telle que celle illustrée par la figure 1.

L'ébauche est formée à partir de trois bandes fibreuses obtenues chacune par tissage tridimensionnel ou tissage multicouches, à savoir une bande centrale 102 entourée par deux bandes externes 104, 106. Ces trois bandes fibreuses s'étendent de façon générale dans une direction X correspondant à la direction longitudinale du pied à fabriquer.

Il est supposé ici que le tissage des bandes fibreuses 102, 104 et 106 est réalisé avec des fils de chaîne s'étendant dans la direction longitudinale X du pied à fabriquer, étant noté qu'un tissage avec des fils de trame dans cette direction est également possible.

Par ailleurs, dans l'exemple de la figure 2, la bande centrale 102 comprend un ensemble de couches de fils de chaîne, le nombre de couches étant ici égal à 9 (couches c₁ à c₉). Quant aux bandes externes 104, 106, elles comprennent chacune un ensemble de couches de fils de chaîne égal à 5 (couches c₁₀ à c₁₄ pour la bande externe 104 et couches c₁₅ à c₁₉ pour la bande externe 106).

Les fils de chaîne des ensembles de couches de fils formant la bande centrale 102 et les deux bandes externes 104, 106 sont liés entre eux par tissage tridimensionnel par des fils de trame, respectivement t₁, t₂ et t₃. Différents types de tissage tridimensionnel pourront être utilisés. On pourra notamment se référer au document WO 2006/136755 qui donne différents exemples.

Dans le cas de la fabrication d'une aube selon le procédé décrit dans le document WO 2010/061140, la bande centrale 102 est avantageusement utilisée pour la réalisation de la partie destinée, après mise en forme, à constituer une partie de préforme d'aube correspondant à la préforme de pale. De même, l'une des deux bandes externes peut avantageusement être utilisée pour la réalisation de la partie destinée, après mise en forme, à constituer une partie de préforme d'aube correspondant à la préforme de plateforme.

Au-delà de la partie de la bande centrale 102 destinée, après mise en forme, à constituer la partie de préforme d'aube correspondant à la préforme de pale, les bandes externes 104, 106 viennent chacune traverser la bande centrale 102 de part en part pour émerger du côté de la bande centrale opposé à celui de leur introduction. En outre, dans ce mouvement de traversée de la bande centrale, ces bandes externes viennent se croiser à l'intérieur même de la bande centrale.

On obtient ainsi un croisement en X des deux bandes externes 104, 106 au sein de la bande centrale 102 avec un inversement des bandes externes au-delà de la zone de l'ébauche fibreuse correspondant à la traversée de la bande centrale.

On notera que les fils des différents ensembles de couches de fils formant la bande centrale 102 et les deux bandes externes 104, 106 ne sont pas liés entre eux en avant et au-delà de zone de l'ébauche fibreuse correspondant à la traversée de la bande centrale par les deux bandes externes.

Les deux bandes externes 104, 106 traversent la bande centrale 102 selon des directions formant un angle α compris entre 15° et 75° par rapport à la direction X de la bande centrale. De préférence, cet angle α est égal à 45°.

Les bandes fibreuses sont alors coupées comme suit. La bande centrale 102 est coupée un peu au-delà de la zone correspondant au croisement en son sein des deux bandes externes. Quant aux bandes externes 104, 106, elles sont coupées, d'une part au niveau de la face respective de la bande centrale de laquelle elles émergent au-delà du croisement (les parties extérieures à la bande centrale sont coupées), et d'autre part en avant de la zone correspondant à la traversée de la bande centrale pour laisser subsister des tronçons de bande 104a, 106a de la part et d'autre de la bande centrale (figure 3).

Une préforme fibreuse 100 du pied d'aube à fabriquer est ensuite obtenue par moulage pour former une préforme avec une partie principale formant préforme de pied en une seule pièce avec deux parties secondaires correspondant aux tronçons de bande 104a, 106a et formant préformes de portées. Après moulage, ces tronçons de bande 104a, 106a forment un angle compris entre 15° et 75° par rapport à la direction longitudinale de l'aube.

Après un éventuel usinage, la préforme du pied d'aube est alors densifiée par une matrice pour obtenir un pied d'aube en matériau composite ayant un renfort fibreux constitué par la préforme et densifié par la matrice.

Dans le cadre de la fabrication d'une aube selon le procédé décrit dans le document WO 2010/061140, on notera que la préforme du pied d'aube 100 est avantageusement formée en une seule partie avec la partie de préforme correspondant à la préforme de pale.

## Revendications

1. Procédé de fabrication d'un pied d'aube de turbomachine en matériau composite comprenant un renfort fibreux densifié par une matrice, le procédé comportant :
la réalisation d'une bande fibreuse centrale (102) et de deux bandes fibreuses externes (104, 106) à partir de trois ensembles de couches de fils (c₁ à c₉, c₁₀ à c₁₄, c₁₅ à c₁₉) liées entre elles par tissage tridimensionnel, les bandes fibreuses s'étendant selon une même direction correspondant à la direction longitudinale du pied d'aube à fabriquer et les fils des ensembles de couches de fils n'étant pas liés entre les différentes bandes fibreuses ;
la traversée de la bande centrale par les deux bandes externes avec croisement des deux bandes externes à l'intérieur de la bande centrale ;
l'élimination par découpe de parties des deux bandes externes qui sont extérieures à la bande centrale pour former une ébauche fibreuse de pied d'aube ;
la mise en forme de l'ébauche fibreuse pour obtenir une préforme fibreuse ayant une partie principale formant préforme de pied d'aube en une seule pièce avec deux parties secondaires (104a, 106a) formant préformes de portées ; et
la densification de la préforme fibreuse par une matrice pour obtenir un pied d'aube en matériau composite ayant un renfort fibreux constitué par la préforme et densifié par la matrice.

2. Procédé selon la revendication 1, dans lequel les deux bandes externes traversent la bande centrale selon des directions formant un angle (α) compris entre 15° et 75° par rapport à la direction de la bande centrale.

3. Procédé selon la revendication 2, dans lequel les deux bandes externes traversent la bande centrale selon des directions formant un angle (α) de 45° par rapport à la direction de la bande centrale.

4. Procédé selon l'une quelconque des revendications 1 à 3, dans lequel la bande centrale est également utilisée pour la réalisation d'une préforme fibreuse de pale d'aube.

5. Procédé selon l'une quelconque des revendications 1 à 4, dans lequel au moins l'une des bandes externes est également utilisée pour la réalisation d'une préforme fibreuse de plateforme et/ou de talon d'aube.

6. Procédé selon l'une quelconque des revendications 1 à 5, dans lequel les bandes fibreuses sont tissées avec leur direction longitudinale (X) correspondant à celle du pied d'aube à fabriquer s'étendant en sens chaîne.

7. Procédé selon l'une quelconque des revendications 1 à 5, dans lequel les bandes fibreuses sont tissées avec leur direction longitudinale (X) correspondant à celle du pied d'aube à fabriquer s'étendant en sens trame.

8. Pied d'aube (14) de turbomachine en matériau composite comprenant un renfort fibreux densifié par une matrice, **caractérisé en ce que** le pied d'aube comporte une partie constitutive de pied d'aube formant une seule pièce avec deux parties constitutives de portées, les deux parties constitutives de portées traversant la partie constitutive de pied d'aube avec croisement des parties constitutives de portées à l'intérieur de la partie constitutive de pied d'aube.

9. Pied d'aube selon la revendication 8, dans lequel les deux parties constitutives de portées forment un angle compris entre 15° et 75° avec la partie constitutive de pied d'aube.

10. Pied d'aube selon la revendication 9, dans lequel les deux parties constitutives de portées forment un angle de 45° avec la partie constitutive de pied d'aube.

11. Pied d'aube selon l'une quelconque des revendications 8 à 10, dans lequel le pied d'aube est en matériau composite à matrice céramique.

12. Aube (10) de turbomachine équipée d'un pied d'aube (14) selon l'une quelconque des revendications 8 à 11.

13. Turbomachine équipée d'au moins une aube (10) selon la revendication 12.

## Patentansprüche

1. Verfahren zur Herstellung eines Schaufelfußes einer Turbomaschine aus Verbundwerkstoff mit einer durch eine Matrix verdichteten Faserverstärkung, wobei das Verfahren umfasst:
das Ausbilden einer mittleren Faserbahn (102) und von zwei äußeren Faserbahnen (104, 106) aus drei Anordnungen von Fadenlagen (c₁ bis c₉, c₁₀ bis c₁₄, c₁₅ bis c₁₉), die durch dreidimensionales Weben untereinander verbunden sind, wobei sich die Faserbahnen in einer gleichen Richtung erstrecken, die der Längsrichtung des herzustellenden Schaufelfußes entspricht, und wobei die Fäden der Anordnungen von Fadenlagen zwischen den verschiedenen Faserbahnen nicht verbunden sind,
das Durchqueren der mittleren Bahn durch die beiden äußeren Bahnen, mit Kreuzen der beiden äußeren Bahnen innerhalb der mittleren Bahn,
das Wegschneiden von Teilen der beiden äußeren Bahnen, die sich außerhalb der mittleren Bahn befinden, um einen Faserrohling eines Schaufelfußes zu bilden,
das Informbringen des Faserrohlings für den Erhalt eines Faservorformlings mit einem einen Schaufelfußvorformling bildenden Hauptteil, welcher mit zwei Auflageflächenvorformlinge bildenden Sekundärteilen (104a, 106a) einstückig ausgebildet ist, und
das Verdichten des Faservorformlings durch eine Matrix, um einen Schaufelfuß aus Verbundwerkstoff mit einer Faserverstärkung, welche durch den Vorformling gebildet und durch die Matrix verdichtet ist, zu erhalten.

2. Verfahren nach Anspruch 1, bei dem die beiden äußeren Bahnen die mittlere Bahn in Richtungen durchqueren, die einen Winkel (α) im Bereich zwischen 15° und 75° gegenüber der Richtung der mittleren Bahn bilden.

3. Verfahren nach Anspruch 2, bei dem die beiden äußeren Bahnen die mittlere Bahn in Richtungen durchqueren, die einen Winkel (α) von 45° gegenüber der Richtung der mittleren Bahn bilden.

4. Verfahren nach einem der Ansprüche 1 bis 3, bei dem die mittlere Bahn auch für die Herstellung eines Faservorformlings eines Schaufelblattes verwendet wird.

5. Verfahren nach einem der Ansprüche 1 bis 4, bei dem wenigstens eine der äußeren Bahnen auch für die Herstellung eines Faservorformlings einer Schaufelplattform und/oder eines Schaufeldeckbandes verwendet wird.

6. Verfahren nach einem der Ansprüche 1 bis 5, bei dem die Faserbahnen so gewebt sind, dass ihre Längsrichtung (X) derjenigen des herzustellenden Schaufelfußes entspricht, die sich in Kettrichtung erstreckt.

7. Verfahren nach einem der Ansprüche 1 bis 5, bei dem die Faserbahnen so gewebt sind, dass ihre Längsrichtung (X) derjenigen des herzustellenden Schaufelfußes entspricht, die sich in Schussrichtung erstreckt.

8. Schaufelfuß (14) einer Turbomaschine aus Verbundwerkstoff, umfassend eine durch eine Matrix verdichtete Faserverstärkung, **dadurch gekennzeichnet, dass** der Schaufelfuß einen einen Schaufelfuß bildenden Teil aufweist, der mit zwei Auflageflächen bildenden Teilen einstückig ausgebildet ist, wobei die beiden Auflageflächen bildenden Teile den den Schaufelfuß bildenden Teil durchqueren, wobei die Auflageflächen bildenden Teile sich innerhalb des den Schaufelfuß bildenden Teils kreuzen.

9. Schaufelfuß nach Anspruch 8, bei dem die beiden Auflageflächen bildenden Teile mit dem den Schaufelfuß bildenden Teil einen Winkel im Bereich zwischen 15° und 75° bilden.

10. Schaufelfuß nach Anspruch 9, bei dem die beiden Auflageflächen bildenden Teile mit dem den Schaufelfuß bildenden Teile einen Winkel von 45° bilden.

11. Schaufelfuß nach einem der Ansprüche 8 bis 10, bei dem der Schaufelfuß aus Keramikmatrix-Verbundwerkstoff besteht.

12. Turbomaschinenschaufel (10), die mit einem Schaufelfuß (14) nach einem der Ansprüche 8 bis 11 ausgestattet ist.

13. Turbomaschine, die mit wenigstens einer Schaufel (10) nach Anspruch 12 ausgestattet ist.

## Claims

1. A method of fabricating a turbine engine blade root out of composite material comprising fiber reinforcement densified by a matrix, the method comprising:
• making a central fiber strip (102) and two outer fiber strips (104, 106) from three sets of yarn layers (c₁ to c₉, c₁₀ to c₁₄, c₁₅ to c₁₉) interlinked by three-dimensional weaving, the fiber strips extending in a common direction corresponding to the longitudinal direction of the blade root to be fabricated and the yarns of the yarn layer sets not being interlinked between the various fiber strips;
• passing the two outer strips through the central strip with the two outer strips crossing each other inside the central strip;
• eliminating the portions of the two outer strips lying outside the central strip by cutting them off in order to form a blade root fiber blank;
• shaping the fiber blank in order to obtain a fiber preform having a main portion forming a blade-root preform integral with two secondary portions (104a, 106a) forming bearing-plate preforms; and
• densifying the fiber preform with a matrix in order to obtain a blade-root made of composite material having fiber reinforcement constituted by the preform and densified by the matrix.

2. A method according to claim 1, wherein the two outer strips pass through the central strip in directions forming an angle (α) lying in the range 15° to 75° relative to the direction of the central strip.

3. A method according to claim 2, wherein the two outer strips pass through the central strip in directions forming an angle (α) of 45° relative to the direction of the central strip.

4. A method according to any one of claims 1 to 3, wherein the central strip is also used for making a fiber preform for a blade airfoil.

5. A method according to any one of claims 1 to 4, wherein at least one of the outer strips is also used for making a fiber preform for a blade platform.

6. A method according to any one of claims 1 to 5, wherein the fiber strips are woven with their longitudinal directions (X) that correspond to the direction of the blade root that is to be fabricated extending in the warp direction.

7. A method according to any one of claims 1 to 5, wherein the fiber strips are woven with their longitudinal directions (X) that correspond to the direction of the blade root that is to be fabricated extending in the weft direction.

8. A turbine engine blade root (14) made of composite material comprising fiber reinforcement densified by a matrix, the blade root being **characterized in that** it includes a blade-root constituting portion integrally formed with two bearing-plate constituting portions, the two bearing-plate constituting portions passing through the blade-root constituting portion with the bearing-plate constituting portions crossing within the blade-root constituting portion.

9. A blade root according to claim 8, wherein the two bearing-plate constituting portions form an angle lying in the range 15° to 75° with the blade-root constituting portion.

10. A blade root according to claim 9, wherein the two bearing-plate constituting portions form an angle of 45° with the blade-root constituting portion.

11. A blade root according to any one of claims 8 to 10, wherein the blade root is made of ceramic matrix composite material.

12. A turbine engine blade (10) having a blade root (14) according to any one of claims 8 to 11.

13. A turbine engine having at least one blade (10) according to claim 12.
